(19) **Europäisches Patentamt**
**European Patent Office**
**Office européen des brevets**

(11) **EP 2 793 012 B1**

(12) **EUROPEAN PATENT SPECIFICATION**

(45) Date of publication and mention
of the grant of the patent:
**19.05.2021  Bulletin 2021/20**

(51) Int Cl.:
*G01M 15/05* *(2006.01)*   *F02P 17/02* *(2006.01)*
*G01M 15/06* *(2006.01)*   *G01M 15/08* *(2006.01)*
*F02D 41/40* *(2006.01)*   *F02D 41/00* *(2006.01)*
*F02D 35/02* *(2006.01)*   *G01L 23/22* *(2006.01)*

(21) Application number: **14460001.2**

(22) Date of filing: **23.01.2014**

(54) **A System for the precise determination of crankshaft angular position for fuel self-ignition, especially in the cylinder of diesel engine using Langmuir probe**

System zur genauen Bestimmung der Kurbelwellenwinkelposition zur Brennstoffselbstzündung, insbesondere im Zylinder eines Dieselmotors mit Langmuir-Sonde

Système pour la détermination précise de la position angulaire du vilebrequin pour l'auto-allumage de carburant, en particulier dans le cylindre de moteur diesel utilisant une sonde de Langmuir

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2013  PL 40266913**

(43) Date of publication of application:
**22.10.2014  Bulletin 2014/43**

(73) Proprietors:
 • **Instytut Maszyn Przeplywowych PAN.
  im. R. Szewalskiego
  80-952 Gdansk (PL)**
 • **Energa Spolka Akcyjna
  80-309 Gdansk (PL)**

(72) Inventors:
 • **Cenian, Adam
  81-520 Gdynia (PL)**
 • **Piechowski, Leszek
  81-200 Gdynia (PL)**
 • **Korczewski, Zbigniew
  81-187 Gdynia (PL)**
 • **Rudnicki, Jacek
  80-288 Gdansk (PL)**
 • **Cenian, Witold
  81-595 Gdynia (PL)**

(74) Representative: **Matyka, Malgorzata
  Kancelaria Prawno-Patentowa
  Malgorzata Matyka
  Ul. Zielony Stok 12/1U
  80-119 Gdansk (PL)**

(56) References cited:
  **US-A1- 2001 006 004     US-A1- 2005 092 287**

 • **Magnus Glavmo ET AL: "400 Commonwealth Drive 1999-01-0549 Closed Loop Start of Combustion Control Utilizing Ionization Sensing in a Diesel Engine Reprinted From: Electronic Engine Control 1999: Neural Networks, Diagnostic and Electronic Hardware, and Controls (SP-14)", , 31 January 1999 (1999-01-31), XP055140358, Retrieved from the Internet: URL:http://am.delphi.com/pdf/techpapers/19 99-01-0549.PDF [retrieved on 2014-09-15]**

**Description**

A System for the precise determination of crankshaft angular position for fuel self-ignition, especially in the cylinder of diesel engine using Langmuir probe

Area of the Invention

The present invention relates to the system and process for precise determination of crankshaft angular position for fuel self-ignition, especially in cylinders of diesel engines using a Langmuir probe.

Background of the Invention

Presently applied systems for determination of the crank-shaft angle are based on signals from a pressure indicator placed in the cylinder of diesel engine, or a vibration indicator placed e.g. on the cylinder head cover or its mounting bolts. The crank-shaft angle can be deduced e.g. by analysing the indicator diagram. The rate of pressure growth is calculated using its time derivative (dp/dt) and correlation with appearance of vibrations related to fuel system operation - mainly injector.

In the paper "Closed Loop Start of Combustion Control Utilizing Ionization Sensing in a Diesel Engine " by Magnus Glavmo, et al., SAE Technical Paper Series, No. 1999-01-0549, reprinted from: Electronic Engine Control 1999: Neural Networks, Diagnostic and Electronic Hardware, and Controls (SP - 14), a system is described, which controls the start of combustion in a Diesel engine utilizing an ionization sensor and a sense capacitor.

The application of ion probe for diagnostics of combustion in Diesel motors was lately proposed by Fadi Estefanous "Ionization in Diesel combustion: mechanism, new instrumentation and engine applications", PhD thesis (UMI Number: 3466645), Graduate School of Wayne State University, Detroit, Michigan (2011). The thesis presented a system based on a Langmuir probe for monitoring of combustion process in internal combustion engines (ICE). A 3D model of plasma generation during ignition was presented. The model was applied to determine the amount of soot and NO in the collector of ICE from measurements of electric charge at various power loads of the engine. The measuring set-up included a Langmuir probe placed in the engine cylinder through a special hole and linked with a signal amplifier and a system determining the crank-shaft angle. The work focuses on estimation of soot and NOx concentration in exhaust gas. It does not consider the problem of determination of the crankshaft angular position for fuel self-ignition in engine cylinders using a Langmuir probe signal.

From the US patent 2001/0006004 A1 "Method for determining the top dead centre of an internal combustion engine", describing the method of TDC determination from a plot of pressure changes in an engine cylinder a system utilizing a pressure meter is known.

In U.S. Pat. PCT/US2010/042549 a system including an isolated fuel-injector, which allows ionisation current measurement, is disclosed.

The US patent 2005/0092287 A1 "Method and apparatus for detecting ionization signal in Diesel and dual mode engines with plasma discharge system" describes methods and apparatus enabling determination of the combustion conditions utilizing the ionization signal and its application as feedback control of the Diesel engine. A spark plug type of sensor or a sensor integrated with fuel injector are applied.

Besides, Pat. CN 1380811A describes the application of a Langmuir probe to measure plasma parameters in real time, aiming at the determination of plasma characteristics.

Summary of the Invention

The present invention relates to a system according to claim 1.

**The main concept of the system according to this invention** is based on the placement of a Langmuir probe together with a pressure sensor in a specially constructed metal adapter using an existing hole to house a pressure meter, sensor in the cylinder or head of the engine.

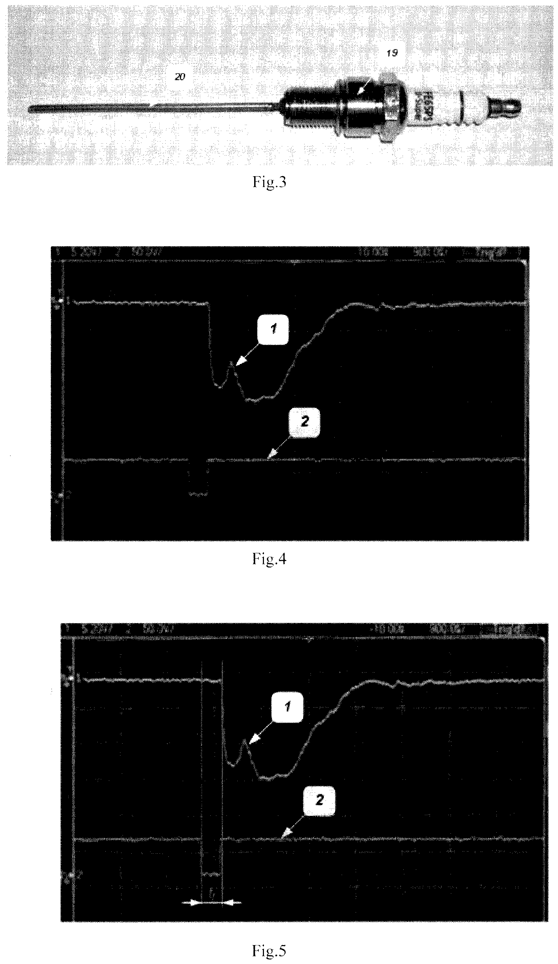

An advantage of the proposed monitoring system is that by direct placement of the Langmuir probe in an engine cylinder one can precisely determine the self-ignition time in real time during engine operation. Besides, an additional advantage of the invention is the design of a Langmuir probe using a standard spark plug - see Fig. 3. The proposed design assures that the probe can withstand the existing elevated pressures and temperatures in the cylinder at low cost.

Brief description of the drawings

The monitoring system for precise determination of the crankshaft angular position for fuel self-ignition is presented in Fig. 1. Figure 2 shows an alternative system for determination of fuel self-ignition angle and Fig. 3. presents a possible Langmuir probe design. Figures 4 - 7 illustrate examples of measured Langmuir probe signals related to TDC pulse.

Preferred embodiment of the invention

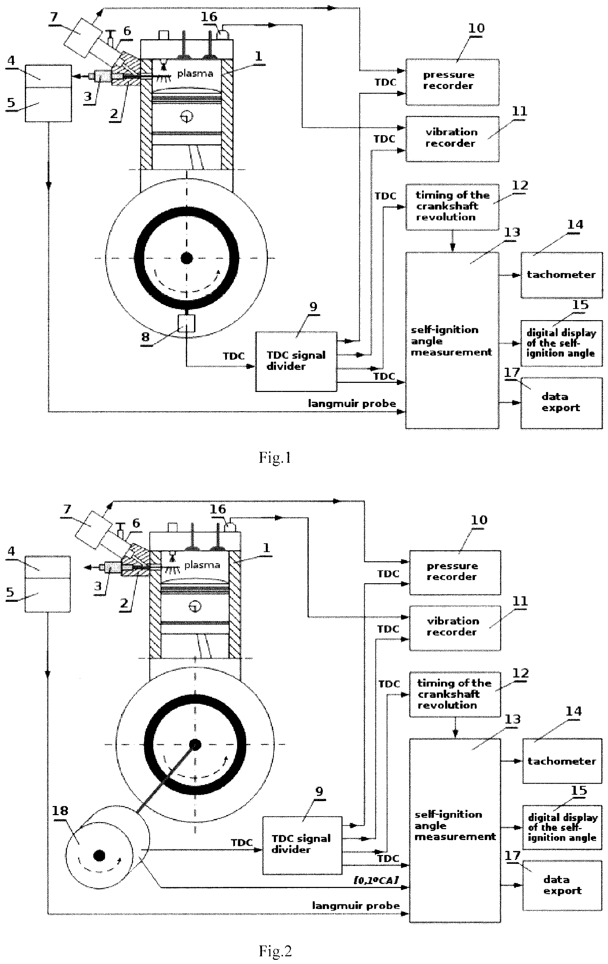

A system for monitoring of the fuel self-ignition angle in the cylinder of a diesel engine is presented in Fig. 1. A two-channel metal adapter with pressure indicator (6) and Langmuir probe (3) is placed in an engine cylinder - as presented in Fig. 3. In the indicator channel a pressure sensor (7) is placed, which generates a signal which is sent to the electronic pressure recorder (10). A Langmuir probe (3) consisting of mounting block (19) and a symmetrically placed axis-symmetrical sensor (20) is connected with a power source (4) and signal amplification set-up (5). The amplification set-up (5) is connected with the fuel self-ignition angle recorder (13). The monitoring system includes the Top Dead Centre (TDC) signal generator (8). Its signal is transmitted to the TDC signal divider (9), which after galvanic separation is transmitted to the electronic pressure recorder (10), the vibration recorder (11), the crankshaft revolution timer (12) and the self-ignition angle recorder (13). The vibrational sensor (16), placed on the cylinder head cover or its mounting bolts, sends its signals to the vibration recorder (11).

The signal from the self-ignition angle recorder (13) is sent to numerical indicator of self-ignition angle (15) and the signal determining the value of angular velocity to its numerical indicator (14). Export of data from the self-ignition angle recorder (13) is performed through data transmission set-up (17) to external monitoring systems.

The monitoring-system for the self-ignition angle is alternatively equipped with a pulsed rotating transducer (18) (see Fig. 2), generating 3600 pulses/crankshaft revolution, which replaces less precise determination of TDC by inductive sensor (8). The rotating transducer (18) generates TDC pulses which are send to TDC signal divider (9) .

A Langmuir probe (3) placed in combustion chamber determined the ignition time, as presented in Fig. 4. Line 1 presents signal shape related to electrical charge generation in the cylinder. Line 2 presents a TDC signal. The time interval $t_i$ between both pulses is presented in Fig. 5.

The angle of advance (in deg of the crankshaft angle - $^0$ CSA) or delay of the self- ignition is calculated in the self-ignition angle recorder (13) from the equation:

$$\alpha\left[{}^\circ CSA\right] = \frac{t_i}{T} \cdot 360^\circ \qquad (1)$$

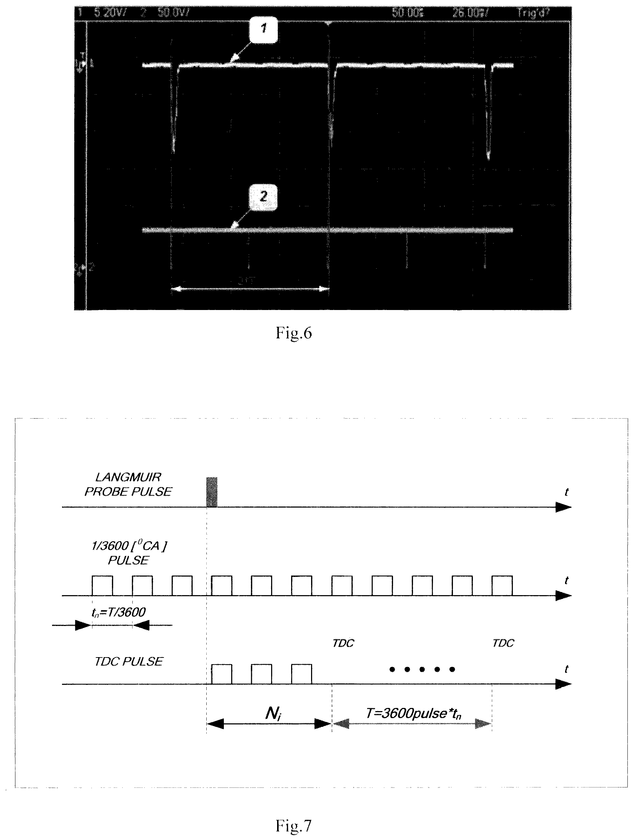

where: $t_i$ - time interval between the beginning of Langmuir probe and TDC signals;
T - period of crankshaft revolution; Fig. 6 presents the T period in the case of a 4-stroke diesel engine.

In the case of alternative TDC set-up (see Fig. 2), the self-ignition angle is calculated in the self-ignition angle recorder (13) from the equation (see also Fig. 7):

$$\alpha\left[{}^\circ CSA\right] = \frac{N_i}{3600} \cdot 360^\circ = \frac{N_i}{10} \qquad (2)$$

where: $N_i$ - a number of pulses generated by rotating transducer (18) registered by the recorder (13) in time interval from the beginning of Langmuir probe and TDC signal.

3600 - number of pulses generated by the rotating transducer (18) during a period T of crankshaft revolution.

Use of the invention

The proposed monitoring system by direct placement of the Langmuir probe in an engine cylinder enable precise determination of the self-ignition time in real time during engine operation.

**Claims**

1. A system for monitoring of the fuel self-ignition angle, especially in the cylinder of a diesel engine, applying Langmuir probe
   **characterized in that**
   the monitoring system comprises
   a two-channel metal adapter (2) with pressure indicator (6) and Langmuir probe (3) placed in an engine cylinder (1),

while in the pressure indicator channel a pressure sensor (7) is placed, which generates a signal which is sent to an electronic pressure recorder (10), while the Langmuir probe (3) is placed in the other channel of the two-channel adapter and is connected with a power source (4) and a signal amplification set-up (5), which is connected with a fuel self-ignition angle recorder (13),

a Top Dead Centre (TDC) signal generator (8), the signal of which is transmitted to a TDC signal divider (9), which after galvanic separation is transmitted to

- the electronic pressure recorder (10),
- a vibration recorder (11),
- a crankshaft revolution timer (12) and
- the self-ignition angle recorder (13),

while

- a vibrational sensor (16) sends its signals to the vibration recorder (11),
- the signal from the self-ignition angle recorder (13) is sent to a numerical indicator of self-ignition angle (15) and
- the signal determining the value of angular velocity to its numerical indicator (14), a data transmission set-up (17) configured to export data from the self-ignition angle recorder (13) to external monitoring systems.

**Patentansprüche**

1.  System zur Überwachung des Zündwinkels des Kraftstoffs, insbesondere im Zylinder eines Dieselmotors unter Anwendung der Langmuir-Sonde, das **dadurch gekennzeichnet ist, dass**:

    das Monitoring-System aus
    einem Zweikanal-Metalladapter (2) mit einem Indikatorhahn (6) und einer Langmuir-Sonde (3) im Motorzylinder (1) besteht,
    während sich im Kanal mit dem Indikatorhahn ein Drucksensor (7) befindet, der ein Signal erzeugt, welches an das elektronische Druckmessgerät (10) geleitet wird,
    während sich die Langmuir-Sonde (3) im zweiten Kanal des Zweikanaladapters befindet und mit einer Stromquelle (4) und einem Signalverstärkungssystem (5) verbunden ist, das wiederum mit dem Kraftstoff-Zündwinkelmesser (13) verbunden ist,
    Werkzeug zum Einstellen des oberen Totpunktes (GMP) (8), dessen Signal an den GMP-Signalsplitter (9) gesendet und nach galvanischer Trennung geleitet wird an

    - ein elektronisches Druckmessgerät (10),
    - einen Schwingungsmesser (11),
    - einen Kurbelwellen-Drehzahlmesser (12), und
    - Kraftstoff-Zündwinkelmesser (13),

    wohingegen

    - der Schwingungssensor (16) seine Signale an den Schwingungsmesser (11) weiterleitet,
    - das Signal vom Kraftstoff-Zündwinkelmesser (13) an die digitale Zündwinkelanzeige (15) übertragen wird und
    - das Signal, das den Wert der Winkelgeschwindigkeit bestimmt, an ihre Digitalanzeige (14) gesendet wird

    das Datenübertragungssystem (17) ist derartig konfiguriert, dass es Daten vom Kraftstoff-Zündwinkelmesser (13) zu den externen Überwachungssystemen überträgt.

**Revendications**

1.  Système pour la détermination précise de la position angulaire du vilebrequin pour l'auto-allumage de carburant, en particulier dans le cylindre de moteur diesel, utilisant une sonde de Langmuir, **caractérisé en ce que**

le système de surveillance comprend :

un adaptateur métallique à double canal (2) avec un robinet indicateur (6) et une sonde de Langmuir (3) situé dans un cylindre du moteur (1),

tandis que dans un canal avec un robinet indicateur se trouve un capteur de pression (7) qui génère un signal envoyé à un manomètre numérique (10),
tandis que la sonde de Langmuir (3) est placée dans le deuxième canal de l'adaptateur à double canal et elle est connectée à une source d'alimentation (4) et à un système d'amplification de signal (5) qui est connecté à un capteur de position angulaire du vilebrequin pour l'auto-allumage de carburant (13),

un capteur point mort haut (PMH) (8), dont le signal est envoyé à un distributeur d'allumage PMH (9), qui après l'isolation galvanique est envoyé à :

- un manomètre numérique (10)
- un vibromètre (11)
- un compteur de vitesse de rotation du vilebrequin (12) et
- un capteur de position angulaire du vilebrequin pour l'auto-allumage de carburant (13)

où /pendant que

- un capteur de vibrations (16) transmet ses signaux au vibromètre (11)
- un signal du capteur de position angulaire du vilebrequin pour l'auto-allumage de carburant (13) est envoyé à un indicateur numérique de la position angulaire du vilebrequin (15) et
- un signal de vitesse angulaire est envoyé à un indicateur numérique de la vitesse angulaire (14)

un système de transmission de données (17) configuré pour exporter des données depuis un capteur de position angulaire du vilebrequin pour l'auto-allumage de carburant (13) vers des systèmes de surveillance externes.

Fig.1

Fig.2

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010006004 A1
- US 2010042549 W
- US 20050092287 A1
- CN 1380811 A

**Non-patent literature cited in the description**

- **MAGNUS GLAVMO et al.** Closed Loop Start of Combustion Control Utilizing Ionization Sensing in a Diesel Engine. *SAE Technical Paper Series, No. 1999-01-0549, reprinted from: Electronic Engine Control 1999: Neural Networks, Diagnostic and Electronic Hardware, and Controls (SP - 14),* 1999
- Ionization in Diesel combustion: mechanism, new instrumentation and engine applications. PhD thesis (UMI Number: 3466645). Graduate School of Wayne State University, 2011